# EUROPEAN PATENT APPLICATION

(11) **EP 2 784 283 A2**
(43) Date of publication of application: **01.10.2014**
(21) Application number: 14161538.5
(22) Date of filing: 25.03.2014
(51) Int. Cl.: F01N 3/28, B32B 27/00, F01N 3/20

(54) **Holding sealing material for exhaust gas purifying apparatus, method for manufacturing holding sealing material, exhaust gas purifying apparatus, and method for manufacturing exhaust gas purifying apparatus**

(30) Priority: 26.03.2013 JP 2013064685
(71) Applicant: Ibiden Co., Ltd., Ogaki-shi Gifu 503-8604 (JP)
(72) Inventor: Sugiura, Yuya, aichi, 444-1301 (JP); Eguchi, Masayuki, aichi, 444-1301 (JP); Hagino, Masashi, aichi, 444-1301 (JP)
(74) Representative: HOFFMANN EITLE

(57) **Abstract**

The present invention provides a holding sealing material (10) that is wound around an exhaust gas treating body, which is canned in a casing to be used as an exhaust gas purifying apparatus. Since the holding sealing material (10) includes a heater (15), the exhaust gas treating body can be heated at any time by the heater, and the temperature of the exhaust gas treating body - catalyst carrier - can be quickly raised immediately after the start of an internal combustion engine, allowing the catalysts to perform their function. The present invention provides a holding sealing material (10) for an exhaust gas purifying apparatus, the holding sealing material (10) including a mat (31) including inorganic fibers and a heater (15) disposed on either one of main surfaces of the mat (31) constituting said holding sealing material (10).

## Description

### TECHNICAL FIELD

The present invention relates to a holding sealing material for an exhaust gas purifying apparatus, a method for manufacturing the holding sealing material, an exhaust gas purifying apparatus, and a method for manufacturing the exhaust gas purifying apparatus.

### BACKGROUND ART

Exhaust gases discharged from internal combustion engines such as diesel engines contain particulate matter (hereinafter, also referred to as PM). Recently, PM has been a problem because of its harmful effect on the environment and the human body. Exhaust gases also contain toxic gas components such as CO, HC, and NOx, and there has been thus growing concern about the harmful effect of these toxic gas components on the environment and the human body.

In view of the above situation, various exhaust gas purifying apparatuses have been proposed for collecting PM in exhaust gases and for purifying toxic gas components. These exhaust gas purifying apparatuses include: an exhaust gas treating body made of porous ceramics (such as silicon carbide or cordierite) or metals; a casing for canning the exhaust gas treating body; and a holding sealing material disposed between the exhaust gas treating body and the casing.

Among the exhaust gas purifying apparatuses, a catalyst converter that purifies the toxic gas components must be operated under a predetermined activation temperature, otherwise the exhaust gas treating body fails to perform sufficient catalytic action. For example, immediately after the start of an internal combustion engine such as an engine or when the engine is not running in a hybrid vehicle, the temperature of the exhaust gas treating body is lower than the activation temperature. Consequently, the toxic gas components may not be sufficiently purified.

Thus, Patent Literature 1 proposes a catalyst converter for purifying exhaust gases, wherein a metallic catalyst carrier itself is used as an exothermic resistor, i.e., an electric heater, so as to raise the temperature of the metallic catalyst carrier to a level equal to or higher than the activation temperature even in the case described above.

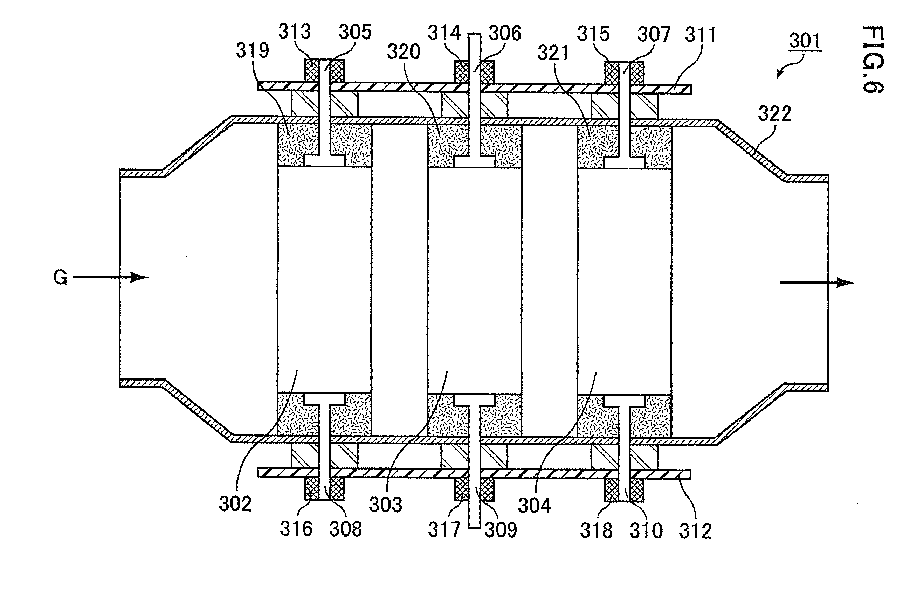

Fig. 6 is a cross-sectional view schematically showing a catalyst converter for purifying exhaust gases according to Patent Literature 1.

As shown in Fig. 6, a catalyst converter 301 for purifying exhaust gases is provided with a plurality of metallic catalyst carriers 302 to 304 for fail-safe operation. In order to connect electrode members 305 to 310 in parallel, the positive electrode members 305 to 307 are respectively connected to the negative electrode members 308 to 310 via conductive heat sinks 311 and 312, and these electrode members 305 to 310 are respectively secured with nuts 313 to 318.

In addition, the catalyst converter is configured such that the plurality of electrode members 305 to 310 are inserted into a casing 322 (a metallic shell) from the outside. The electrode members 305 to 310 inserted through holes formed in the casing 322 and holes formed in holding sealing materials 319 to 321 are in contact with the metallic catalyst carriers 302 to 304. The electrode members 305 to 310 energize the metallic catalyst carriers 302 to 304 with electricity from a power source so as to cause the metallic catalyst carriers 302 to 304 to generate heat.

### CITATION LIST

### - Patent Literature

Patent Literature 1: JP-A H05-269387

### SUMMARY OF INVENTION

### - Technical Problem

As described above, the holding sealing materials 319 to 321 are provided with holes, and the electrode members 305 to 310 are inserted into these holes so as to connect the metallic catalyst carriers 302 to 304 to the electrode members 305 to 310. Thus, an increase in the contact area between the metallic catalyst carriers 302 to 304 and the electrode members 305 to 310 reduces the area of the holding sealing materials 319 to 321. This unfortunately reduces the total elastic force of the holding sealing materials as well as the thermal insulation effect thereof on the metallic catalyst carriers 302 to 304. On the other hand, a decrease in the holes formed in the holding sealing materials 319 to 321 reduces the contact area between the metallic catalyst carriers 302 to 304 and the electrode members 305 to 310. This unfortunately tends to result in connection failures.

Another problem associated with the method of Patent Literature 1 is that this method is not applicable to a catalyst carrier made of an electrically insulating material such as cordierite because the metallic catalyst carriers 302 to 304 themselves are used as heaters to cause the metallic catalyst carriers 302 to 304 to generate heat in this method.

The present invention is achieved in order to solve the above problems. An object of the present invention is to provide an exhaust gas purifying apparatus, a method for manufacturing the exhaust gas purifying apparatus, a holding sealing material for the exhaust gas purifying apparatus, and a method for manufacturing the same, wherein the exhaust gas purifying apparatus is highly capable of thermally insulating and holding an exhaust gas treating body, is less prone to problems such as connection failures, and requires no holes to be formed in the holding sealing material.

### - Solution to Problem

In order to achieve the above object, the holding sealing material for the exhaust gas purifying apparatus of the present invention is configured such that a holding sealing material includes a mat including inorganic fibers, and a heater is disposed on either one of main surfaces of the mat constituting the holding sealing material.

Usually, the holding sealing material for the exhaust gas purifying apparatus of the present invention is wound around an exhaust gas treating body, and the exhaust gas treating body around which the holding sealing material is wound is canned in a casing so as to be used as an exhaust gas purifying apparatus. Since the holding sealing material is provided with a heater, the exhaust gas treating body can be heated at any time by the heater.

In addition, in this exhaust gas purifying apparatus, the heater can be disposed in contact with the surface of the exhaust gas treating body. Thus, the exhaust gas treating body can be quickly heated and the temperature thereof can be quickly raised by the heater.

Therefore, the exhaust gas purifying apparatus that uses the holding sealing material can not only raise the temperature of the exhaust gas treating body (catalyst carrier) immediately after the start of an internal combustion engine such as an engine but can also heat the exhaust gas treating body to maintain its temperature at a level equal to or higher than a predetermined temperature when the motor is running but the engine is not running in a vehicle equipped with the motor and the engine (for example, a hybrid vehicle). Thus, the exhaust gas treating body can immediately function as the exhaust gas purifying apparatus, upon restarting the engine.

The holding sealing material for the exhaust gas purifying apparatus of the present invention is preferably configured such that an organic sheet is attached to the surface of the mat constituting the holding sealing material, and a heater is disposed between the organic sheet and the mat.

Since the holding sealing material having above configuration includes the heater that is secured to the main surface of the mat via the organic sheet, the heater can be held between the holding sealing material and the exhaust gas treating body by directly winding the holding sealing material provided with the heater around the exhaust gas treating body. Thus, the exhaust gas purifying apparatus provided with the heater can be easily manufactured. It should be noted that the organic sheet is heated by the temperature of the exhaust gases that are introduced into the exhaust gas purifying apparatus, and the organic sheet is thereby decomposed and eliminated.

In the holding sealing material of the present invention, a material of the organic sheet preferably includes at least one selected from the group consisting of polyolefin resin, vinyl resin, styrol resin, and polyester resin.

These resins have sufficient flexibility, so that the heater disposed between the organic sheet and the mat can be firmly held, and the shock from the outside can be absorbed. As a result, problems such as disconnection of the heater can be prevented. In addition, the organic sheet can be easily thermally decomposed when exhaust gases flow into the exhaust gas purifying apparatus that uses the holding sealing material having the above configuration.

In the holding sealing material of the present invention, the heater preferably consists of a Kanthal wire.

A Kanthal wire, which is made of an alloy of nickel, chrome, and aluminium, is commonly used, and it is suitable as a heater because of its excellent heat resistance, excellent durability, and large amount of heat generation. The exhaust gas purifying apparatus that uses the holding sealing material is configured such that the temperature can be quickly raised, and thus the exhaust gas purifying apparatus can be provided with excellent exhaust gas purification performance.

In the holding sealing material of the present invention, the heater preferably includes at least one selected from the group consisting of gold, silver, platinum, palladium, lead, tungsten, molybdenum, chrome, iron, aluminium, and nickel.

In the holding sealing material, various metals are combined to thereby provide a heater having various characteristics in accordance with required heater characteristics. Thus, the exhaust gas purifying apparatus can be provided with excellent exhaust gas purification performance by the use of the holding sealing material.

In the holding sealing material of the present invention, the inorganic fibers preferably include at least one selected from the group consisting of alumina fibers, alumina-silica fibers, silica fibers, and bio-soluble fibers.

In the case where the inorganic fibers of the holding sealing material includes at least one of alumina fibers, alumina-silica fibers, and silica fibers, the holding sealing material has excellent heat resistance. Thus, even if the temperature of the heater is sufficiently high, no change in quality or the like occurs and the functions of the holding sealing material can be sufficiently maintained. In the case where the inorganic fibers are bio-soluble fibers, scattered inorganic fibers that are inhaled or the like during manufacturing of the exhaust gas purifying apparatus using the holding sealing material will be dissolved in the body, thus causing no harm to the health of the workers.

In the holding sealing material of the present invention, the heater is preferably disposed on the entire holding sealing material.

When the heater is disposed on the entire holding sealing material, it results in the heater being disposed around the entire exhaust gas treating body in the exhaust gas purifying apparatus that uses the holding sealing material, and the entire exhaust gas treating body is thus heated by the heater. As a result, the temperature of the exhaust gas treating body becomes uniform, and the occurrence of partial purification of exhaust gases is prevented.

The holding sealing material of the present invention preferably further includes, as an expansive agent, at least one material selected from the group consisting of vermiculite, bentonite, bronze mica, perlite, expandable graphite, and expandable fluoro-mica.

Since the holding sealing material includes an expansive agent, the exhaust gas purifying apparatus that uses the holding sealing material can firmly hold the exhaust gas treating body and prevent the exhaust gas treating body from falling off from the casing, owing to the effect of the expansive agent.

The holding sealing material of the present invention is preferably needle-punched. Needle-punching is a treatment in which fiber-entangling means, such as a needle, is inserted into and withdrawn from a base mat.

In the thus treated holding sealing material, the inorganic fibers having a relatively long average fiber length are three-dimensionally entangled with one another by needle-punching.

Thus, in the exhaust gas purifying apparatus that uses the holding sealing material, the inorganic fibers constituting the holding sealing material are sufficiently entangled with one another, and scattering and detachment of the inorganic fibers from the holding sealing material are prevented.

A method for manufacturing a holding sealing material of the present invention is a method for manufacturing the holding sealing material having the above configuration, the method including: preparing a mat-shaped holding sealing material including a mat including inorganic fibers; and arranging a heater and an organic sheet on the mat constituting the holding sealing material such that the heater is disposed between the mat and the organic sheet, and then attaching the organic sheet to the mat.

According to the above method for manufacturing the holding sealing material, the heater can be easily placed and secured to the surface of the mat by the use of the organic sheet. Thus, it possible to relatively easily manufacture the exhaust gas purifying apparatus in which the heater is disposed between the holding sealing material and the exhaust gas treating body by the use of the holding sealing material prepared above in which the organic sheet is attached to the surface of the mat and the heater is disposed between the organic sheet and the mat. In addition, in the manufactured exhaust gas purifying apparatus, the exhaust gas treating body constituting the exhaust gas purifying apparatus can be heated at any time.

In the method for manufacturing the holding sealing material of the present invention, the organic sheet is preferably attached to the mat by bonding the organic sheet to the mat by thermal compression; by bonding the organic sheet to the mat by applying an adhesive to the organic sheet, on a side facing the mat; or by sewing the organic sheet into the mat with thread.

The availability of various attachment methods described above enables to choose the best method according to the material of the organic sheet, the shape and material of the heater, and the like, and the heater can be firmly held between the organic sheet and the mat.

The exhaust gas purifying apparatus of the present invention includes a casing, an exhaust gas treating body canned in the casing, and a holding sealing material including a mat including inorganic fibers, the holding sealing material being wound around the exhaust gas treating body and disposed between the exhaust gas treating body and the casing, wherein a heater is disposed between the mat constituting the holding sealing material and the exhaust gas treating body.

In the exhaust gas purifying apparatus of the present invention, the heater disposed around the exhaust gas treating body is used as a means to raise the temperature of the exhaust gas treating body, and the heater can be easily connected to a power source by a connecting member or the like. Thus, there is hardly any risk of connection failure, and the exhaust gas treating body can be reliably heated.

In addition, in the exhaust gas purifying apparatus of the present invention, there is no need to form holes in the holding sealing material to reduce the area of the holding sealing material. As a result, the present invention provides an exhaust gas purifying apparatus that can not only sufficiently thermally insulate the exhaust gas treating body by the holding sealing material and but can also maintain the elastic force of the holding sealing material at a high level and thus firmly holding the exhaust gas treating body.

In addition, in the exhaust gas purifying apparatus of the present invention, a conductive wire connected to the heater only needs to be led to the outside of the casing, and there is no need to form large holes in the casing and the holding sealing material to bring the electrode members into contact with the exhaust gas treating body from the outside. Thus, the exhaust gas treating body around which the holding sealing material is wound can be canned in the casing by various methods such as press fitting, providing a wider range of choices of canning methods.

The exhaust gas purifying apparatus of the present invention can not only raise the temperature of the exhaust gas treating body (catalyst carrier) immediately after the start of an internal combustion engine such as an engine but can also heat the exhaust gas treating body to maintain its temperature at a level equal to or higher than a predetermined temperature when the motor is running but the engine is not running in a vehicle equipped with the motor and the engine (for example, a hybrid vehicle). Thus, the exhaust gas treating body can immediately function as the exhaust gas purifying apparatus, upon starting the engine.

The exhaust gas purifying apparatus of the present invention preferably uses cordierite as a material constituting the exhaust gas treating body.

In the exhaust gas purifying apparatus having the above configuration, the heater is disposed between the mat constituting the holding sealing material and the exhaust gas treating body, and the exhaust gas treating body is thus in contact with the heater. In order to use the heater as a heating element, it is preferred to use an exhaust gas treating body consisting of an electrically insulating material such as cordierite, which inhibits current flow even upon contact with the heater. Since the heater is in contact with the exhaust gas treating body, the rate of temperature increase is fast, and the temperature of the exhaust gas treating body can be quickly raised, allowing catalysts to function as exhaust gas purifying catalysts.

A method for manufacturing the exhaust gas purifying apparatus of the present invention is a method for manufacturing the exhaust gas purifying apparatus having the above configuration, the method including: preparing a mat-shaped holding sealing material including a mat including inorganic fibers; arranging a heater and an organic sheet on the mat constituting the holding sealing material such that the heater is disposed between the mat and the organic sheet, and then attaching the organic sheet to the mat; winding the manufactured holding sealing material around the exhaust gas treating body such that the organic sheet is in contact with the lateral side of the exhaust gas treating body; and canning the exhaust gas treating body around which the holding sealing material is wound in a casing.

In the method for manufacturing the exhaust gas purifying apparatus of the present invention, after the above method for manufacturing the holding sealing material is used to manufacture the holding sealing material in which the heater is disposed between the mat and the organic sheet, the manufactured holding sealing material is wound around the exhaust gas treating body such that the organic sheet is in contact with the lateral side of the exhaust gas treating body, and the exhaust gas treating body around which the holding sealing material is wound can be canned in a casing by means such press fitting. The exhaust gas purifying apparatus in which the heater is disposed between the holding sealing material and the exhaust gas treating body can be relatively easily manufactured by the above method.

In the method for manufacturing the exhaust gas purifying apparatus of the present invention, after canning is performed, the heater is preferably energized before exhaust gases are introduced into the exhaust gas purifying apparatus.

This causes the organic sheet attached to the surface of the mat to be decomposed and eliminated. Thus, exhaust gases introduced into the exhaust gas purifying apparatus do not cause a situation where organic substances are decomposed into gases. Therefore, a malfunction of a sensor and the like mounted in a vehicle is prevented. This also allows the heater to come into contact with the exhaust gas treating body, and the exhaust gas treating body can thus be quickly heated.

In the case where the holding sealing material contains an expansive agent, the heater is energized before exhaust gases are introduced into the exhaust gas purifying apparatus to thereby allow the expansive agent to expand. This improves the holding strength of the holding sealing material and ensures that the exhaust gas treating body is firmly held.

In the case where the holding sealing material and the exhaust gas treating body contain organic substances such as an organic binder, the organic substances such as an organic binder can be decomposed and eliminated by energizing the heater before exhaust gases are introduced into the exhaust gas purifying apparatus, thus preventing a malfunction of a sensor and the like mounted in a vehicle.

In this case, before mounting the exhaust gas purifying apparatus in a vehicle or the like, the holding sealing material and the exhaust gas treating body may be heated by energizing the heater by a device that can flow a gas or the like through the inside of the casing and that can also energize the heater.

### BRIEF DESCRIPTION OF DRAWINGS

Fig. 1(a) is a perspective view schematically showing an example of a holding sealing material of the present invention.
Fig. 1(b) is an A-A cross-sectional view of the holding sealing material shown in Fig. 1(a).
Fig. 2 is a cross-sectional view schematically showing an example of an exhaust gas purifying apparatus of the present invention.
Fig. 3 is a perspective view schematically showing an example of an exhaust gas treating body constituting the exhaust gas purifying apparatus of the present invention.
Fig. 4 is a perspective view schematically showing one of the steps of a method for manufacturing the exhaust gas purifying apparatus of the present invention.
Figs. 5(a) and 5(b) are plan views each schematically showing a different shape of the heater used in the holding sealing material of the present invention.
Fig. 6 is a cross-sectional view schematically showing a conventional catalyst converter for purifying exhaust gases.

### DETAILED DESCRIPTION OF THE INVENTION

Hereinafter, a holding sealing material for an exhaust gas purifying apparatus of the present invention, an exhaust gas purifying apparatus that uses the holding sealing material, and a method for manufacturing the exhaust gas purifying apparatus are described.

The holding sealing material for an exhaust gas purifying apparatus of the present invention includes a heater disposed on either one of main surfaces of a mat constituting the holding sealing material.

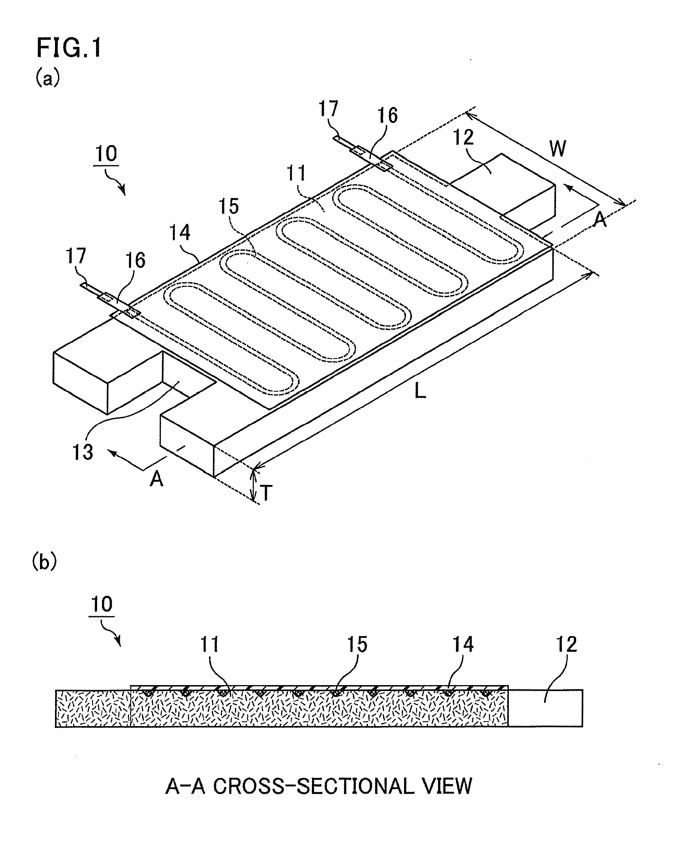

Fig. 1(a) is a perspective view schematically showing an example of a holding sealing material of the present invention, and Fig. 1(b) is an A-A cross-sectional view of the holding sealing material shown in Fig. 1(a).

As shown in Fig. 1(a), a mat 11 constituting a holding sealing material 10 of the present invention is a plate-shaped mat that is substantially rectangular in a plan view, with a predetermined length (hereinafter, indicated by an arrow L in Fig. 1), width (indicated by an arrow W in Fig. 1), and thickness (indicated by an arrow T in Fig. 1).

The mat 11 shown in Fig. 1 is configured such that a projected portion 12 is formed at one end and a recessed portion 13 is formed at the other end in the longitudinal direction of the mat 11. The projected portion 12 and the recessed portion 13 of the mat 11 have shapes that fit well to each other when the mat 11 is wound around the exhaust gas treating body so as to assemble an exhaust gas purifying apparatus (described later).

As shown in Figs. 1(a) and 1(b), an organic sheet 14 is attached to the surface of the mat 11 constituting the holding sealing material 10, and a heater 15 is disposed between the organic sheet 14 and the mat 11.

In addition, an external terminal 16 is connected to each end of the heater 15, and a conductive wire 17 is connected to each external terminal 16.

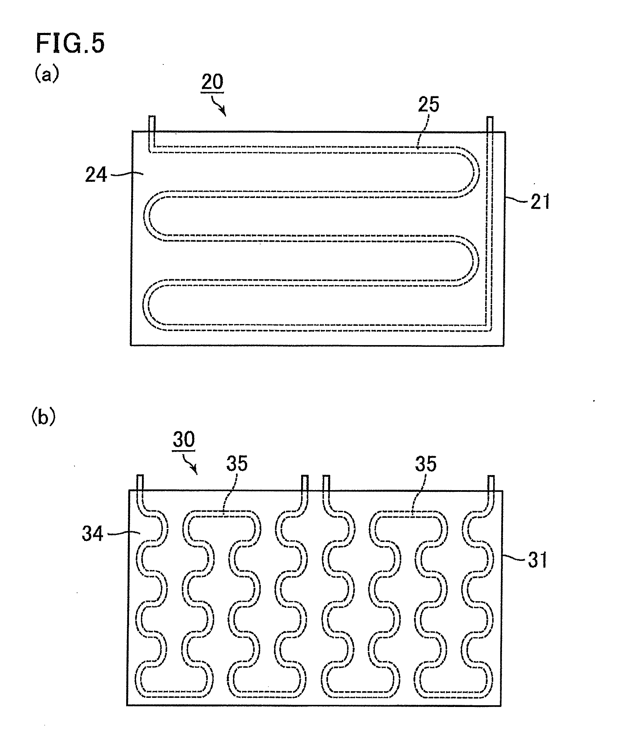

The wire heater 15 is used as the heater in the holding sealing material 10 shown in Figs. 1(a) and 1(b). This heater 15 is repeatedly bent at certain short intervals such that a substantially parallel pattern is created by segments that are formed via bent portions. When the thus formed heater 15 is viewed from its ends in the longitudinal direction, it has a substantially rectangular profile, and straight lines are repeatedly arranged in parallel, via bent portions formed alternately on the right and left sides. The amount of heat generation of the heater 15 is adjusted basically by adjusting the resistance of the heater 15. The amount of heat generation can also be adjusted by adjusting the gap between the parallel lines per unit length. It should be noted that the shape of the heater is not limited to the one shown in Fig. 1 as long as it has a shape (pattern) that can heat the exhaust gas treating body to a uniform temperature. Other shapes such as the ones shown in Figs. 5(a) and 5(b) are also adequate.

In the case of a mat 21 constituting a holding sealing material 20 shown in Fig. 5(a), a heater 25 repeatedly extends in the longitudinal direction via bent portions. When the heater 25 has a shape as shown in Fig. 5 (a), the heater can cover a larger area and thus can provide efficient heating. The heater can also be flexibly stretched under tension, which is generated during winding of the mat around the exhaust gas treating body, and the disconnection of the heater is thus prevented.

In the case of a mat 31 constituting a holding sealing material 30 shown in Fig. 5(b), a heater 35 first extends in a direction perpendicular to the longitudinal direction (i.e., in a width direction) while repeatedly being bent at short intervals, and this pattern is repeated in the longitudinal direction. The heater 35 shown in Fig. 5(b) consists of two heaters 35, and a power source and the two heaters are connected in parallel. When the resistance of the resistance pattern is high and it is difficult to perform sufficient heating by a long resistance element, the resistance element may be divided into several parts, as shown in Fig. 5(b).

A material constituting the heater 15 is not particularly limited. Examples thereof include a Kanthal wire and a nichrome wire. A commercially available heater consisting of at least one selected from the group consisting of gold, silver, platinum, palladium, lead, tungsten, molybdenum, chrome, iron, aluminium, and nickel; or a commercially available heater consisting of conductive ceramics or the like such as silicon carbide can also be used. The heater 15 may be a commercially available product, or a heater consisting of a desired material and having a desired shape (pattern) may be manufactured.

The heater 15 shown in Figs. 1 (a) and 1 (b) is a wire heater; however, the shape of the heater 15 is not limited to a wire whose cross section perpendicular to a direction in which the wire heater extends is substantially round. The cross section may have an elliptical or rectangular shape. Alternatively, the heater may be a plate-shaped resistance that is cut into a predetermined pattern.

Examples of materials constituting the organic sheet 14 include polyolefin resins such as polyethylene, polypropylene, butadiene rubber, and polyisobutylene rubber; vinyl resins such as vinyl chloride and vinyl acetate; styrol resins such as polystyrene and ABS resin; and polyester resins such as polyethylene phthalate and polyether ester. The organic sheet may be a non-woven fabric such as a film, or a woven fabric made of the above material in a fiber form.

The organic sheet 14 preferably has a thickness of 20 to 200 µm. An organic sheet of less than 20 µm in thickness is too thin and may be broken, for example, upon being attached. On the other hand, an organic sheet of more than 200 µm in thickness is too thick, and the amount of inorganic fibers attached per unit weight will thus be too large. In this case, although the organic sheet can be successfully press-fitted in the casing, the amount of hydrocarbon gas and the like generated from decomposition will be unfortunately too large.

The mat constituting the holding sealing material includes the organic sheet attached thereto. After the holding sealing material is canned in the casing, and the exhaust gas purifying apparatus is manufactured and mounted in a vehicle or the like, the organic sheet can be decomposed and eliminated by energizing the heater disposed before starting the engine, thus preventing a malfunction of a sensor and the like mounted in the vehicle.

Before mounting the exhaust gas purifying apparatus in a vehicle or the like, the organic sheet may be heated by energizing the heater by a device that can flow a gas or the like through the inside of the casing and that can also energize the heater.

The mat 11 mainly includes inorganic fibers.

The inorganic fibers include at least one selected from the group consisting of alumina fibers, alumina-silica fibers, silica fibers, and bio-soluble fibers.

The alumina fibers may contain, in addition to alumina, additives such as CaO, MgO, and ZrO₂.

The alumina-silica fiber composition in terms of weight ratio is preferably such that Al₂O₃:SiO₂ = 60:40 to 80:20, and more preferably Al₂O₃:SiO₂ = 70:30 to 74:26. Fibers containing alumina and silica in the above ratio are also referred to as alumina fibers.

The silica fibers may also contain, in addition to silica, additives such as CaO, MgO, and ZrO₂.

The bio-soluble fibers are inorganic fibers that contain, for example, in addition to silica and the like, at least one compound selected from the group consisting of an alkali metal compound, an alkaline-earth metal compound, and a boron compound.

The bio-soluble fibers including these compounds are easily dissolved when taken into the human body, and thus a mat made of these inorganic fibers is highly safe to the human body.

A specific bio-soluble fiber composition may contain, for example, 60 to 85 wt% of silica and 15 to 40 wt% of at least one compound selected from the group consisting of an alkali metal compound, an alkaline-earth metal compound, and a boron compound. The silica refers to SiO or SiO₂.

Examples of the alkali metal compound include oxides of Na and K. Examples of the alkaline-earth metal compound include oxides of Mg, Ca, and Ba. Examples of the boron compound include an oxide of B.

If the silica content in the bio-soluble fiber composition is less than 60 wt%, bio-soluble fibers will be difficult to manufacture by a glass fusion method, and fibers are not easily formed. If the silica content is less than 60 wt%, the resulting structure will be fragile because the silica content giving flexibility is low, and the resulting bio-soluble fibers will be easily dissolved in a normal saline solution. In addition, since the proportion of the at least one compound, which will give solubility and selected from the group consisting of an alkali metal compound, an alkaline-earth metal compound, and a boron compound, is relatively high in such a composition, the resulting bio-soluble fibers will be too easily dissolved in a normal saline solution.

On the other hand, if the silica content is more than 85 wt%, the proportion of the at least one compound selected from the group consisting of an alkali metal compound, an alkaline-earth metal compound, and a boron compound will be relatively low, so that the resulting bio-soluble fibers will not be easily dissolved in a normal saline solution.

The silica content is calculated by converting the amounts of SiO and SiO₂ into the amount of SiO₂.

In addition, in the bio-soluble fiber composition, the content of the at least one compound selected from the group consisting of an alkali metal compound, an alkaline-earth metal compound, and a boron compound is preferably 15 to 40 wt%. If the content of the at least one compound selected from the group consisting of an alkali metal compound, an alkaline-earth metal compound, and a boron compound is less than 15 wt%, the resulting bio-soluble fibers will not be easily dissolved in a normal saline solution.

On the other hand, if the content of the at least one compound selected from the group consisting of an alkali metal compound, an alkaline-earth metal compound, and a boron compound is more than 40 wt%, bio-soluble fibers will be difficult to manufacture by a glass fusion method, and fibers are not easily formed. In addition, if the content of the at least one compound selected from the group consisting of an alkali metal compound, an alkaline-earth metal compound, and a boron compound is more than 40 wt%, the resulting structure will be fragile, and the resulting bio-soluble fibers will be too easily dissolved in a normal saline solution.

The solubility of the bio-soluble fibers in a normal saline solution is preferably 30 ppm or more because bio-soluble fibers having a solubility of less than 30 ppm are not easily discharged from the body when such inorganic fibers are taken into the body, which is not favorable to health.

The basis weight (weight per unit area) of the mat constituting the holding sealing material of the present invention is not particularly limited, and is preferably 200 to 4000 g/m² and more preferably 1000 to 3000 g/m². A mat having a basis weight of less than 200 g/m² has insufficient holding strength as the holding sealing material. A mat having a basis weight of more than 4000 g/m² tends to be bulky. Thus, if the exhaust gas purifying apparatus is manufactured using such a mat as the holding sealing material, the exhaust gas treating body will easily come off from the casing.

In addition, the bulk density of the mat (the bulk density of the holding sealing material before canning) is also not particularly limited, and is preferably 0.10 to 0.50 g/cm³. A mat having a bulk density of less than 0.10 g/cm³ is difficult to maintain its predetermined shape because the inorganic fibers are loosely entangled and easily separated.

In addition, a mat having a bulk density of more than 0.50 g/cm³ is stiff, poorly wound around the exhaust gas treating body, and easy to break.

The thickness of the mat constituting the holding sealing material of the present invention is not particularly limited, and is preferably 1.5 to 50 mm and more preferably 6 to 20 mm.

A mat having a thickness of less than 1.5 mm has insufficient holding strength as the holding sealing material. Thus, if the exhaust gas purifying apparatus is manufactured using such a mat as the holding sealing material, the exhaust gas treating body will easily come off from the casing. In addition, a mat having a thickness of more than 50 mm is too thick so that such a mat is poorly wound around the exhaust gas treating body and easy to break.

The mat 11 constituting the holding sealing material 10 is preferably needle-punched for forming entanglement of inorganic fibers.

Needle-punching is a treatment in which fiber-entangling means, such as a needle, is inserted into and withdrawn from a sheet-shaped object formed from inorganic fiber precursors. In the mat 11, the inorganic fibers having a relatively long average fiber length are three-dimensionally entangled with one another by needle-punching. In other words, the mat 11 is needle-punched in the width direction perpendicular to the longitudinal direction, and the inorganic fibers are entangled with one another. A description of the inorganic fiber precursors is given in the later section regarding the method for manufacturing the holding sealing material.

The bulkiness of the mat 11 can be adequately reduced by needle-punching, thus improving the working efficiency during canning. Also, the surface pressure of the mat 11 can be increased due to the entanglement structure of the inorganic fibers.

The average fiber length of the inorganic fibers must be long enough to form the entangled structure. For example, the average fiber length of the inorganic fibers is preferably 50 µm to 100 mm. The average diameter of the inorganic fibers is preferably 2 to 10 µm.

The holding sealing material may further contain, as an expansive agent, at least one material selected from the group consisting of vermiculite, bentonite, bronze mica, perlite, expandable graphite, and expandable fluoro-mica. These expansive agents may be used alone or in combination of two or more thereof.

In the case where the holding sealing material contains such as an expansive agent, after the holding sealing material is caned in the casing and the exhaust gas purifying apparatus is manufactured and mounted in a vehicle or the like, the heater disposed inside is energized before starting the engine to thereby heat the inside of the holding sealing material, thus allowing the expansive agent to expand. This improves the holding strength of the holding sealing material and ensures that the exhaust gas treating body is firmly held.

If the engine is started to bring exhaust gases to the exhaust gas purifying apparatus to thereby allow the expansive agent to expand, the pressure of the exhaust gases will be applied to the holding sealing material before the expansive agent expands. This causes the exhaust gas treating body to easily come off.

Before mounting the exhaust gas purifying apparatus in a vehicle or the like, the holding sealing material and the exhaust gas treating body may be heated by energizing the heater by a device that can flow a gas or the like through the inside of the casing, and that can also energize the heater.

The amount of the expansive agent added is not particularly limited. It is preferably 5 to 50 wt% and more preferably 10 to 30 wt% relative to the total weight of the mat material.

The inorganic fibers constituting the holding sealing material may have an organic binder adhered thereto. The adhesion of the organic binder can further strengthen the entanglement structure of the inorganic fibers, and can also suppress the bulkiness of the mat material.

The type of the organic binder is not particularly limited. Examples thereof include epoxy resin, acrylic resin, rubber-based resin, and styrene-based resin.

Preferred among these organic binders are rubber-based resin (latex) and the like. Examples of organic binder-containing solutions include a solution in which a water-soluble organic polymer such as carboxymethylcellulose or polyvinyl alcohol is dissolved; and latex obtained by dispersing acrylic rubber, acrylonitrile-butadiene rubber, or styrene-butadiene rubber in water.

In addition, the amount of organic binder adhered is preferably 0.01 to 10.0 wt%, more preferably 0.05 to 3.0 wt%, and most preferably 0.1 to 1.5 wt%, based on the weight of the mat material.

In the case where an organic binder is adhered to the inorganic fibers constituting the holding sealing material, after the holding sealing material is canned in the casing and the exhaust gas purifying apparatus is manufactured and mounted in a vehicle or the like, the organic binder can be decomposed and eliminated by energizing the heater disposed inside before starting the engine, thus preventing a malfunction of a sensor and the like mounted in the vehicle. Also in the case where the exhaust gas treating body contains an organic component, the organic component can be decomposed and eliminated by energizing the heater before starting the engine.

Before mounting the exhaust gas purifying apparatus in a vehicle or the like, the holding sealing material and the exhaust gas treating body may be heated by energizing the heater by a device that can flow a gas or the like through the inside of the casing and that can also energize the heater.

An inorganic binder may be adhered to the inorganic fibers constituting the mat 11. The inorganic binder is not particularly limited, and preferred examples thereof include alumina sol and silica sol. The amount of inorganic binder adhered is preferably 0. 5 to 3. 0 wt%, in terms of solids content, based on the weight of the mat material. The adhesion of the inorganic binder can suppress scattering of the inorganic fibers.

Next, the method for manufacturing the holding sealing material of the present invention in which a heater is disposed on either one of main surfaces of a mat constituting the holding sealing material is described.

In the method for preparing the holding sealing material, first, a holding sealing material is prepared. In the description below, the method for manufacturing a sealing material containing a mixture of alumina and silica as the inorganic fibers is described as an example, but a fiber material of the sealing material is not limited thereto.

First, silica sol is added to a basic aluminum chloride aqueous solution such that, for example, the composition ratio of alumina to silica is 60-80:40-20 to prepare a solution for alumina fiber precursors. In particular, the composition ratio of alumina to silica is more preferably about 70-74:30-26.

Next, an organic polymer such as polyvinyl alcohol is added to the above solution for alumina fiber precursors, and the resulting solution is concentrated to prepare a spinning solution. Further, the resulting spinning solution is used to spin fibers by a blowing method.

The blowing method is a method in which fibers are spun by the flow of air blown out from an air nozzle and the flow of a spinning solution discharged from a spinning solution supply nozzle. Usually, the gas flow rate per slit of the air nozzle is 40 to 200 m/s. Usually, the diameter of the spinning solution supply nozzle is 0.1 to 0.5 mm, and the amount of solution per single spinning solution supply nozzle is about 1 to 120 mL/h (preferably about 3 to 50 mL/h). Under these conditions, the spinning solution discharged from the spinning solution supply nozzle can be sufficiently drawn without becoming a spray (a misty state), and the adhesion between the resulting fibers is less likely to occur. Thus, uniform alumina fiber precursors having a narrow fiber diameter distribution can be obtained by optimizing the spinning conditions.

The alumina fiber precursors that have been spun are deposited in layers to manufacture a laminated sheet. Further, needling is performed on the laminated sheet. Needling is usually performed using a needling device.

Usually, the needling device includes a needle board capable of moving back and forth in a punching direction (usually, a vertical direction) and a pair of support boards disposed on both sides (one support board on the front and one on the back) of the laminated sheet. A large number of needles for punching the laminated sheet are attached to the needle board at a density of, for example, about 25 to 5000 pieces/100 cm². Each support board has a large number of through holes for the needles. Thus, the needles are inserted into and withdrawn from the laminated sheet, as the needle board moves closer to and away from the laminated sheet in a state where the laminated sheet is held from both sides by the pair of support boards. Consequently, a large number of entangled points are formed by entanglement of inorganic fibers. The fibers that are intricately entangled with one another are oriented in the laminating direction at the entangled points created by such needling.

The needled laminated sheet is continuously fired by heating from room temperature to a maximum temperature of about 1250°C. Thereby, a fired sheet-shaped object is obtained.

The fibers contained in this fired sheet-shaped object have an average fiber length of about 20 to 120 mm. The average diameter of the inorganic fibers is not particularly limited and is about 3 to 10 µm, for example.

Subsequently, the fired sheet-shaped object is cut out into a shape shown in Figs. 1(a) and 1(b). Thereby, the mat 11 shown in Fig. 1 is manufactured.

Next, the organic sheet 14 is attached to the mat 11 such that the heater 15 is disposed between the organic sheet 14 and the mat 11. Thereby, the holding sealing material 10 in which the heater 15 is disposed to either one of the main surfaces of the mat is manufactured.

The holding sealing material 10 in which the heater 15 is disposed to either one of the main surfaces of the mat 11 may also be manufactured by, for example, a method in which the organic sheet is sewn into the mat 11 with thread or the like in a state where the heater 15 is sandwiched between the organic sheet 14 and the mat 11.

Alternatively, a heater having a predetermined shape and made of at least one selected from the group consisting of Kanthal wire, nichrome wire, gold, silver, platinum, palladium, lead, tungsten, molybdenum, chrome, iron, aluminium, and nickel may be manufactured in a separate step and inserted between the organic sheet and the mat.

When manufacturing a heater, a conductive paste containing at least one of the metals described above is prepared, printed on the surface of a support body such as the organic sheet, and dried. Thereby, a support body having a predetermined resistor pattern on the surface thereof is manufactured.

Next, the support body having a resistor pattern formed thereon is placed and fired in a furnace such as a firing furnace. Alternatively, the resistor pattern may be separated from the support body, and placed and fired in a furnace to thereby manufacture the heater 15 as shown in Fig. 1 (a) in advance, which is then sandwiched between the organic sheet 14 and the mat 11.

In this manner, the shape (pattern) of the heater can be freely designed, and the material of the heater can be freely selected. Thus, conditions such as the temperature of the exhaust gas treating body can be successfully controlled.

The conductive paste is not particularly limited, and preferably contains metal particles to ensure conductivity, as well as other components such as resin, solvent, and sticking agent.

These metal particles preferably have a particle size of 0.1 to 100 µm because metal particles of smaller than 0.1 µm (i.e., too fine) are easily oxidized, and metal particles of larger than 100 µm are not easily sintered and the resistance is high.

The metal particles may be spherical or scaly in shape. The spherical particles and scaly particles may be mixed together as the metal particles.

In the case where the metal particles are the scaly particles or the mixed particles of the spherical particles and scaly particles, a metal oxide or the like is easily inserted between the metal particles, and the resistance can be advantageously increased.

Examples of the resin used for the conductive paste include epoxy resin and phenol resin. Examples of the solvent include isopropyl alcohol. Examples of the sticking agent include cellulose.

Further, the manufactured heater or a commercially available heater may be attached to the surface of the mat 11 using an adhesive or the like; or the organic sheet may be attached to the mat using an adhesive or the like such that the heater is sandwiched between the organic sheet and the mat. When attaching the organic sheet to the mat, the organic sheet may be half melted by heat or the like and attached, in the half melted state, to the mat. In other words, the organic sheet may be bonded by thermal compression. Alternatively, the heater may be sewn into the mat with thread or the like, as if sewing into a fabric or the like.

Next, the exhaust gas purifying apparatus that uses the holding sealing material of the present invention is described.

The exhaust gas purifying apparatus of the present invention includes a casing, an exhaust gas treating body canned in the casing, and a holding sealing material including a mat including inorganic fibers, the holding sealing material being wound around the exhaust gas treating body and disposed between the exhaust gas treating body and the casing, wherein a heater is disposed between the mat constituting the holding sealing material and the exhaust gas treating body.

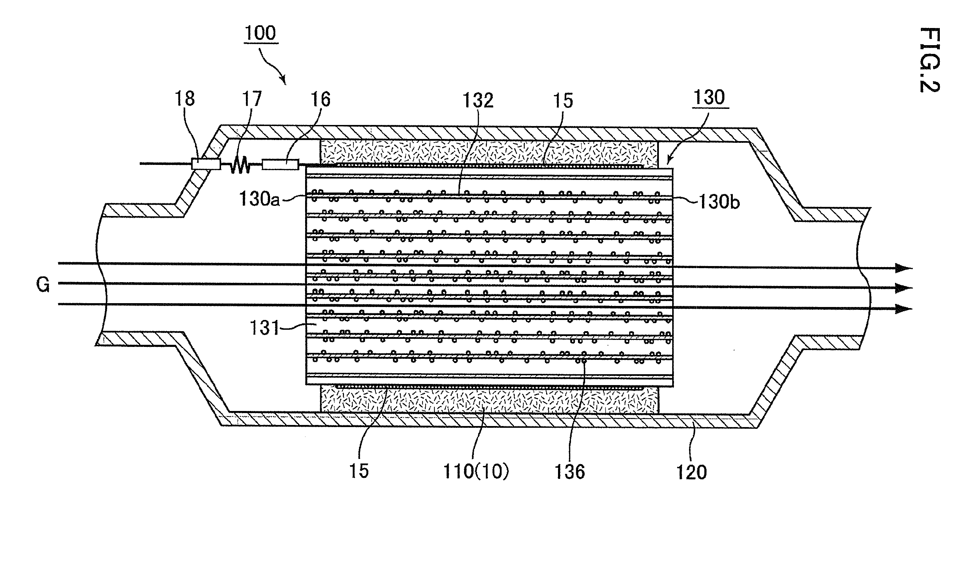

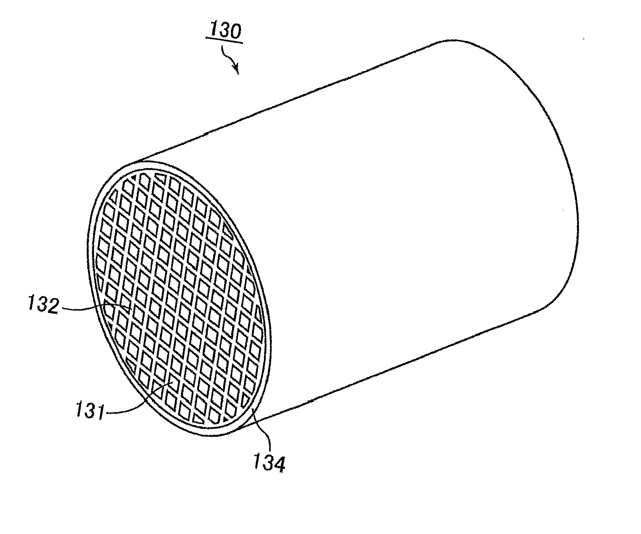

Fig. 2 is a cross-sectional view schematically showing an example of the exhaust gas purifying apparatus of the present invention.

As shown in Fig. 2, an exhaust gas purifying apparatus 100 of the present invention includes a casing 120, an exhaust gas treating body 130 canned in the casing 120, and a holding sealing material 110(10) disposed between the exhaust gas treating body 130 and the casing 120. The heater 15 is disposed on the surface of the holding sealing material 110 (10) such that the heater 15 is in contact with the exhaust gas treating body 130. As a result, the heater 15 is sandwiched between the exhaust gas treating body 130 and the casing 120. The external terminal 16 is connected to an end of the heater 15, and the conductive wire 17 is led to the outside via the external terminal 16. The casing 120 has a through hole formed therein for leading out a conductive wire, and a lead-out member 18 made of electrically insulating ceramics is disposed in the through hole. The conductive wire 17 is led to the outside through the lead-out member 18. The conductive wire 17 is coiled in the casing in order to prevent problems such as disconnection.

The exhaust gas treating body 130 has a pillar shape and includes a large number of cells 131 longitudinally disposed in parallel with one another, with cell walls 132 interposed therebetween. Each cell 131 is open, without being sealed at either end with a plug. An inlet pipe that introduces exhaust gases discharged from an internal combustion engine, and an outlet pipe that discharges the exhaust gases that have passed through the exhaust gas purifying apparatus are connected to the respective ends of the casing 120, if necessary.

The exhaust gas treating body 130 in which each cell is not sealed at either end with a plug is used as a catalyst carrier in the exhaust gas purifying apparatus 100 shown in Fig. 2; however, an exhaust gas filter (honeycomb filter) in which each cell is sealed at either one of its ends with a plug may be used instead.

In addition, the holding sealing material shown in Fig. 1 in which the heater 15 is disposed between the organic sheet 14 and the mat 11 is used as the holding sealing material 110 (10) in the exhaust gas purifying apparatus 100 shown in Fig. 2. The holding sealing material 110(10) is configured such that the organic sheet 14 will be decomposed and eliminated by the heat generated as the exhaust gases pass through the exhaust gas purifying apparatus 100, and the heater 15 is disposed in contact with the exhaust gas treating body 130. Alternatively, the heater may be energized to thereby heat, decompose, and eliminate the organic sheet before exhaust the exhaust gases pass through the exhaust gas purifying apparatus 100.

The passage of exhaust gases through the exhaust gas purifying apparatus 100 having the above configuration is described below with reference to Fig. 2.

As shown in Fig. 2, exhaust gases (in Fig. 2, exhaust gases are indicated by G, and the flow of the exhaust gases is indicated by arrows) discharged from an internal combustion engine and flowed into the exhaust gas purifying apparatus 100 flow into one of the cells 131 that is opened at an end face 130a on the exhaust gas inlet side of the exhaust gas treating body (catalyst carrier) 130; pass through the cell 131 while contacting with catalysts 136 supported on the cell 131; and are discharged from an end face 130b on the exhaust gas outlet side. At this point, toxic gas components such as CO, HC, and NOx in the exhaust gases are purified by the catalysts 136 supported on a cell wall 132.

In the exhaust gas purifying apparatus of the present invention, the heater 15 is disposed in the holding sealing material. Thus, the heater 15 can maintain temperature of the exhaust gas treating body (catalyst carrier) 130 at a level higher than the activation temperature even immediately after the start of an internal combustion engine such as an engine or even when the engine is not running in a vehicle equipped with a hybrid engine, for example, and the toxic gas components can be sufficiently purified.

Next, the exhaust gas treating body (catalyst carrier) and the casing constituting the exhaust gas purifying apparatus of the present invention are described.

The configuration of the holding sealing material constituting the exhaust gas purifying apparatus is the same as described above in the description of the holding sealing material, and the description thereof is thus omitted.

First, the exhaust gas treating body constituting the exhaust gas purifying apparatus is described.

Fig. 3 is a perspective view schematically showing an example of an exhaust gas treating body constituting the exhaust gas purifying apparatus of the present invention.

As shown in Fig. 3, the exhaust gas treating body (catalyst carrier) 130 is mainly made of porous ceramics, and has a substantially round pillar shape. A peripheral coat layer 134 may be provided on the periphery of the catalyst carrier 130 for the following purposes: to reinforce the peripheral portion of the catalyst carrier 130; to adjust the shape of the catalyst carrier 130; and to improve the thermal insulation of the catalyst carrier 130.

Examples of catalysts to be supported on the exhaust gas treating body include noble metals such as platinum, palladium, and rhodium. Examples of other catalysts include alkali metals such as potassium and sodium; alkaline-earth metals such as barium; and oxides of rhodium, iron, vanadium, silver, copper, and cerium. These catalysts may be used alone or in combination of two or more thereof.

Examples of materials of the exhaust gas treating body include silicon carbide and silicon-containing silicon carbide. Examples of other ceramics include nitride ceramics such as aluminum nitride, silicon nitride, boron nitride, and titanium nitride; carbide ceramics such as zirconium carbide, titanium carbide, tantalum carbide, and tungsten carbide; and oxide ceramics such as cordierite, and aluminum titanate. It should be noted that these materials are preferably electrically insulating materials.

The internal configuration of the catalyst carrier 130 is the same as described above in the description of the exhaust gas purifying apparatus of the present invention (see Fig. 2).

Next, the casing constituting the exhaust gas purifying apparatus of the present invention is described.

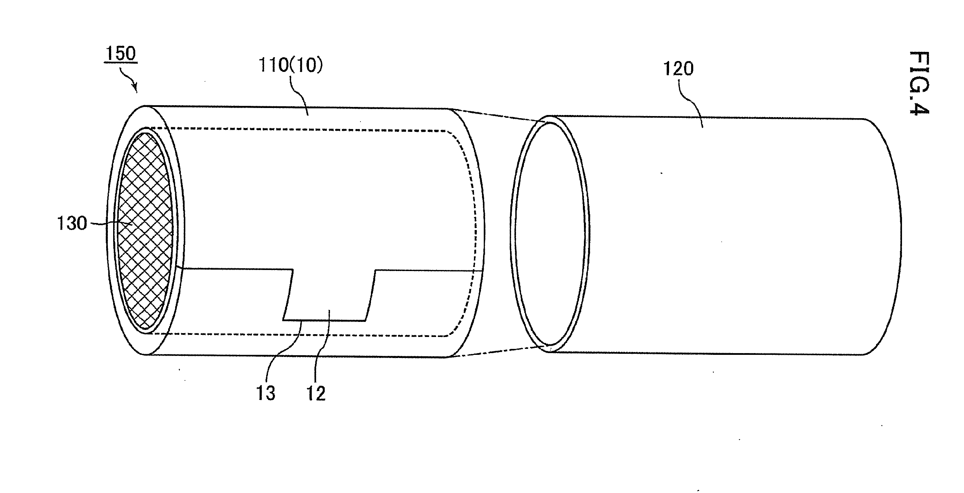

The casing 120 is mainly made of a metal such as stainless steel, aluminium, or iron, and the shape thereof may be substantially cylindrical with the inner diameter at each end being smaller than the inner diameter of the center, as shown in Fig. 4. Alternatively, it may be substantially cylindrical with a constant inner diameter.

The inner diameter of the casing (the inner diameter of a portion for canning the exhaust gas treating body) is preferably slightly less than the sum of the diameter of an end face of the exhaust gas treating body and the thickness of the holding sealing material (mat) that is wound around the exhaust gas treating body.

Subsequently, the method for manufacturing the exhaust gas purifying apparatus of the present invention is described.

Fig. 4 is a perspective view schematically showing one of the steps of the method for manufacturing the exhaust gas purifying apparatus of the present invention. Fig. 4 shows an example in which a substantially cylindrical casing with a constant inner diameter is used.

First, for example, the holding sealing material 10 shown in Fig. 1 in which the heater 15 is disposed between the mat 11 and the organic sheet 14 is manufactured by the method for manufacturing the holding sealing material described above. Next, winding is performed in which the thus manufactured holding sealing material 10 shown in Fig. 1 is wound around the exhaust gas treating body (catalyst carrier) 130 so as to manufacture a wound body (an exhaust gas treating body around which the holding sealing material is wound).

In winding, the mat 11 having the heater 15 disposed thereon is wound around the periphery of the substantially round pillar-shaped exhaust gas treating body 130 manufactured by a conventionally known method such that the projected portion 12 and the recessed portion 13 fit to each other. As a result, a wound body, i.e., the exhaust gas treating body 130 around which the holding sealing material 10 is wound, is manufactured.

After the mat 11 is wound around the exhaust gas treating body 130, the state in which the mat 11 is wound around the exhaust gas treating body 130 can be maintained using an appropriate means such as an adhesive tape, string, or belt. For example, in the case of using an adhesive tape, the adhesive tape is attached to both the projected portion and recessed portion forming a fitting portion to ensure that the state where the projected portion is fitted into the recessed portion is maintained. Alternatively, an adhesive may be applied to the surface of the organic sheet 14, and winding is performed such that the adhesive-coated surface is in contact with the exhaust gas treating body 130. Thereby, the state in which the mat 11 is wound around the exhaust gas treating body 130 can be maintained.

Next, canning is performed in which the manufactured wound body is canned in the substantially cylindrical casing 120 having a predetermined size and mainly made of a metal and the like.

In order to compress the holding sealing material and bring out its predetermined elastic force (i.e., a force to hold the exhaust gas treating body) after canning, the inner diameter of the casing 120 is slightly less than the outermost diameter of the exhaust gas treating body 130 including the thickness of the holding sealing material 110 that is wound around the exhaust gas treating body 130. The wound body manufactured by the method described above is press-fitted in the casing 120 under pressure. The exhaust gas purifying apparatus 100 shown in Fig. 2 can be manufactured by the method described above.

In regard to canning, examples of the method for canning the wound body in the casing include: a press-fitting method (stuffing method) in which the wound body is press-fitted to a predetermined position in the casing; a sizing method (swaging method) in which the wound body is inserted into the casing and thereafter the casing is compressed from its periphery such that the inner diameter of the casing is reduced; and a clam shell method in which the casing is made separable into two parts of a first casing and a second casing, and the wound body is placed on the first casing, which is then covered with the second casing so as to provide hermetic sealing. Any of these methods can be used in the method for manufacturing the exhaust gas purifying apparatus of the present invention.

In the case where the holding sealing material contains an expansive agent, when the heater disposed inside is subsequently energized before starting the engine, it allows the expansive agent to expand. This improves the holding strength of the holding sealing material and ensures that the exhaust gas treating body is firmly held.

Likewise, in the case where the holding sealing material and the exhaust gas treating body contain organic substances such as an organic binder, the organic substances such as an organic binder can be decomposed and eliminated by energizing the heater disposed inside before starting the engine. This prevents a malfunction of a sensor and the like mounted in a vehicle. The heater may be energized for heating before mounted the exhaust gas purifying apparatus in a vehicle or the like.

Hereinafter, effects of the holding sealing material for an exhaust gas purifying apparatus of the present invention, the method for manufacturing the holding sealing material, an exhaust gas purifying apparatus, and the method for manufacturing the exhaust gas purifying apparatus are listed.
(1) In the holding sealing material for the exhaust gas purifying apparatus of the present invention, the holding sealing material is provided with a heater on its surface. Thus, the exhaust gas treating body can be heated at any time by the heater.
   Therefore, the exhaust gas purifying apparatus that uses the holding sealing material can not only raise the temperature of the exhaust gas treating body (catalyst carrier) immediately after the start of an internal combustion engine such as an engine but can also heat the exhaust gas treating body to maintain its temperature at a level equal to or higher than a predetermined temperature when the motor is running but the engine is not running in a vehicle equipped with the motor and the engine (for example, a hybrid vehicle). Thus, the exhaust gas treating body can immediately function as the exhaust gas purifying apparatus, upon starting the engine.
(2) In the exhaust gas purifying apparatus that uses the holding sealing material of the present invention, the heater disposed around the exhaust gas treating body is used as a means to raise the temperature of the exhaust gas treating body, and the heater can be easily connected to a power source by a connecting member or the like. Thus, there is almost no risk of connection failure, and the exhaust gas treating body can be reliably heated.
(3) In the exhaust gas purifying apparatus that uses the holding sealing material of the present invention, there is no need to form large holes in the casing and the holding sealing material to bring the electrode members into contact with the exhaust gas treating body from the outside. Thus, the exhaust gas treating body around which the holding sealing material is wound can be canned in the casing by various methods such as press fitting, providing a wider range of choices of canning methods.
(4) In the exhaust gas purifying apparatus that uses the holding sealing material of the present invention, there is no need to form holes in the holding sealing material to reduce the thermal insulation area. Therefore, the present invention provides an exhaust gas purifying apparatus capable of sufficiently thermally insulating the exhaust gas treating body by the holding sealing material. In addition, there is no decrease in the elastic force of the holding sealing material because the area of the holding sealing material is not reduced. As a result, the exhaust gas treating body will not come off, and the exhaust gas treating body can be firmly held.
(5) In the exhaust gas purifying apparatus that uses the holding sealing material of the present invention, the exhaust gas treating body is not caused to generate heat, and thus the exhaust gas treating body made of an electrically insulating material such as cordierite can be used.
(6) In the exhaust gas purifying apparatus of the present invention, the heater is in contact with the exhaust gas treating body. Thus, the heat of the heater can be quickly transferred to the exhaust gas treating body; the temperature of the exhaust gas treating body can be raised in a short time; and the catalysts can function as exhaust gas purifying catalysts.

### EXAMPLE

Hereinafter, an example that more specifically discloses the embodiment of the present invention is described; however, the present invention is not limited by this example.

In this example, a holding sealing material for an exhaust gas purifying apparatus, a method for manufacturing the holding sealing material, an exhaust gas purifying apparatus, and a method for manufacturing the exhaust gas purifying apparatus, which more specifically illustrate the embodiment of the present invention, are described.

### (Example 1)

### (a) Holding sealing material manufacturing step

In accordance with the following procedure, a holding sealing material was manufactured in which an organic sheet was attached to the surface of a mat, and a heater was held between the organic sheet and the mat.

### (a-1) Fiber spinning step

A basic aluminum chloride aqueous solution was prepared such that the Al content was 70 g/L and the ratio of Al:Cl = 1:1.8 (atom ratio). Silica sol was added to the above solution such that Al₂O₃:SiO₂ = 72:28 (weight ratio) in the inorganic fiber composition after firing. Further, an organic polymer (polyvinyl alcohol) was added in an appropriate amount to the above solution. Thereby, a solution for alumina fiber precursors was prepared.

The obtained mixture was concentrated to provide a spinning solution, and the mixture for spinning was used to spin fibers by a blowing method to prepare alumina fiber precursors having an average fiber diameter of 5.1 µm.

### (a-2) Compressing step

The alumina fiber precursors obtained in step (a-1) above were deposited in layers and compressed. Thereby, a laminated sheet was prepared.

### (a-3) Needle-punching step

The sheet-shaped object obtained in step (a-2) above was continuously needle-punched under conditions shown below to manufacture a needle-punched material.

First, a needle board to which needles were attached at a density of 21 pieces/cm² was prepared. Then, this needle board was placed above one of the surfaces of the sheet-shaped object, and the needle board was moved up and down once in the thickness direction of the sheet-shaped object. Thereby, a needle-punched material was manufactured. At this point, each needle was allowed to penetrate the sheet-shaped object until a barb formed at the tip of the needle has completely protruded from the opposite surface of the sheet-shaped object.

### (a-4) Firing step

The needle-punched material obtained in step (a-3) above was continuously fired to a maximum temperature of about 1250°C. Thereby, a fired sheet-shaped object consisting of inorganic fibers containing alumina and silica at a ratio (in parts by weight) of 72:28 was manufactured. The inorganic fibers had an average fiber diameter of 5.1 µm, and the minimum value of the inorganic fiber diameter was 3.2 µm. The thus obtained alumina fibers had a bulk density of 0.15 g/cm³, and a basis weight of 1400 g/m².

### (a-5) Cutting step

The obtained fired sheet-shaped object was cut so as to manufacture a cut-off sheet-shaped object. Further, the cut-off sheet-shaped object was cut into a piece of 330 mm in total length × 100 mm in width in plan dimensions such that the projected portion 12 of 35 mm in length × 33 mm in width was formed at one end of the piece, and the recessed portion 13 that fits with the projected portion 12 was formed at the other end thereof. Thereby, the holding sealing material 10 was manufactured.

### (a-6) Attaching of the organic sheet to the mat

An adhesive was applied to the organic sheet. Then, as shown in Figs. 1(a) and 1(b), the heater 15 consisting of a Kanthal wire was disposed such that the heater was positioned between the mat 11 constituting the holding sealing material 10 and the organic sheet 14, and the organic sheet 14 was attached to one side of the mat 11.

### (b) Exhaust gas purifying apparatus manufacturing step

### (b-1) Holding sealing material winding step

The holding sealing material 10 manufactured by the above steps, in which the organic sheet 14 was attached to the surface of the mat 11 and the heater 15 was disposed between the organic sheet 14 and the mat 11, was wound around the lateral side of the exhaust gas treating body (a cordierite catalyst carrier) 130 having a diameter of 100 mm and a length of 100 mm, such that the organic sheet 14 was in contact with the cordierite catalyst carrier 130.

### (b-2) Canning of the holding sealing material and the exhaust gas treating body into the casing

The exhaust gas treating body around which the holding sealing material is wound was canned in the casing by the press-fitting method, and an exhaust gas purifying apparatus was thus manufactured.

It should be noted that a through hole for leading out the wiring from the heater to the outside was formed in the casing, and a lead-out member made of electrically insulating ceramics was disposed in the through hole. Thereby, a conductive wire from the heater was led to the outside via an external terminal and the lead-out member.

### (Confirmation of the catalyst carrier performance)

The thus obtained exhaust gas purifying apparatus was placed in an exhaust gas passage of an internal combustion engine for experimental use. Then, a voltage was applied to the heater, and the temperature of the catalyst carrier constituting the exhaust gas purifying apparatus was measured while allowing exhaust gases to flow through the exhaust gas passage. The temperature reached 400°C at which the catalysts perform their function, within 15 seconds. Thus, it was confirmed that the temperature of the catalyst carrier was quickly raised in a short time.

### REFERENCE SIGNS LIST

- 10, 20, 30: holding sealing material
- 11, 21, 31: mat
- 12: projected portion
- 13: recessed portion
- 15, 25, 35: heater
- 14, 24, 34: organic sheet
- 16: external terminal
- 17: conductive wire
- 18: lead-out member
- 100: exhaust gas purifying apparatus
- 110(10): holding sealing material
- 120: casing
- 130: exhaust gas treating body
- 130a: end face on the exhaust gas inlet side
- 130b: end face on the exhaust gas outlet
- 131: cell
- 132: cell wall
- 134: peripheral coat layer
- 136: catalysts

## Claims

1. A holding sealing material for an exhaust gas purifying apparatus, comprising:
a mat including inorganic fibers; and
a heater disposed on either one of main surfaces of the mat constituting said holding sealing material.

2. The holding sealing material according to claim 1,
wherein an organic sheet is attached to a surface of the mat constituting said holding sealing material, and
the heater is disposed between said organic sheet and said mat.

3. The holding sealing material according to claim 1 or 2,
wherein said organic sheet comprises at least one selected from the group consisting of polyolefin resin, vinyl resin, styrol resin, and polyester resin.

4. The holding sealing material according to any of claims 1 to 3,
wherein said heater comprises a Kanthal wire.

5. The holding sealing material according to any of claims 1 to 3,
wherein said heater comprises at least one selected from the group consisting of gold, silver, platinum, palladium, lead, tungsten, molybdenum, chrome, iron, aluminium, and nickel.

6. The holding sealing material according to any of claims 1 to 5,
wherein said inorganic fibers comprise at least one selected from the group consisting of alumina fibers, alumina-silica fibers, silica fibers, and bio-soluble fibers.

7. The holding sealing material according to any of claims 1 to 6,
wherein said heater is entirely disposed on said holding sealing material.

8. The holding sealing material according to any of claims 1 to 7, further comprising, as an expansive agent, at least one selected from the group consisting of vermiculite, bentonite, bronze mica, perlite, expandable graphite, and expandable fluoro-mica.

9. The holding sealing material according to any of claims 1 to 8,
wherein the holding sealing material is further needle-punched.

10. A method for manufacturing the holding sealing material as defined in claims 1 to 9, the method comprising:
preparing a mat-shaped holding sealing material comprising a mat including inorganic fibers; and
arranging a heater and an organic sheet on the mat constituting the holding sealing material such that said heater is disposed between said mat and said organic sheet, and then attaching the organic sheet to the mat.

11. The method for manufacturing the holding sealing material according to claim 10,
wherein said organic sheet is attached to the mat by bonding said organic sheet to the mat by thermal compression; by bonding said organic sheet to the mat by applying an adhesive to said organic sheet, on a side facing said mat; or by sewing said organic sheet into the mat with thread.

12. An exhaust gas purifying apparatus comprising:
a casing;
an exhaust gas treating body canned in said casing; and
a holding sealing material comprising a mat including inorganic fibers, the holding sealing material being wound around said exhaust gas treating body and disposed between said exhaust gas treating body and said casing,
wherein a heater is disposed between the mat constituting said holding sealing material and said exhaust gas treating body.

13. The exhaust gas purifying apparatus according to claim 12,
wherein cordierite is used as a material constituting said exhaust gas treating body.

14. A method for manufacturing the exhaust gas purifying apparatus defined in claim 12 or 13, the method comprising:
preparing a mat-shaped holding sealing material comprising a mat including inorganic fibers;
arranging a heater and an organic sheet on the mat constituting said holding sealing material such that said heater is disposed between said mat and said organic sheet and then attaching said organic sheet to said mat;
winding said manufactured holding sealing material around the exhaust gas treating body such that said organic sheet is in contact with a lateral side of said exhaust gas treating body; and
canning said exhaust gas treating body around which said holding sealing material is wound in a casing.

15. The method for manufacturing the exhaust gas purifying apparatus according to claim 14,
wherein said heater is energized after said canning to thereby internally heat the exhaust gas purifying apparatus.
